(19) Europäisches Patentamt
European Patent Office
Office européen des brevets

(11) **EP 2 062 726 A1**

(12) **EUROPÄISCHE PATENTANMELDUNG**

(43) Veröffentlichungstag:
**27.05.2009 Patentblatt 2009/22**

(21) Anmeldenummer: **08019928.4**

(22) Anmeldetag: **14.11.2008**

(51) Int Cl.:
**B32B 27/36** (2006.01)    **B32B 27/20** (2006.01)
**B65D 65/40** (2006.01)

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**
Benannte Erstreckungsstaaten:
**AL BA MK RS**

(30) Priorität: **21.11.2007 DE 102007055491**

(71) Anmelder: **Mitsubishi Polyester Film GmbH 65203 Wiesbaden (DE)**

(72) Erfinder:
• **Peiffer, Herbert, Prof. Dr. 55126 Mainz (DE)**
• **Kuhmann, Bodo 65594 Runkel (DE)**

(74) Vertreter: **Schweitzer, Klaus et al Plate Schweitzer Zounek Patentanwälte Rheingaustrasse 196 65203 Wiesbaden (DE)**

(54) **Niedrigsiegelnde Polyesterfolie fuer polare Substrate**

(57)    Die Erfindung betrifft eine heißsiegelbare und gegenüber polaren Substraten wie Polyester, PA und PVC, peelfähige, coextrudierte, biaxial orientierte Polyesterfolie, umfassend eine Basisschicht (B) und eine Deckschicht (A), wobei

a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und

b) die Deckschicht (A)

58 bis 97 Gew.-% Polyester,

2 bis 40 Gew.-% polyesterunverträgliches Polymer und

1 bis 10 Gew.-% anorganische und/oder organische Partikel mit einem mittleren Durchmesser $d_{50}$ von 2 bis 8 $\mu$m enthält, wobei

bl) der Polyester zu 20 bis 85 Mol-% aus Einheiten aufgebaut ist, die auf mindestens eine aromatische Dicarbonsäure zurückgehen, und zu 15 bis 80 Mol-% aus Einheiten aufgebaut ist, die auf mindestens eine aliphatische Dicarbonsäure zurückgehen, wobei die Summe der dicarbonsäureabgeleiteten Molprozente 100 % ergibt.

Ein Beispiel für ein polyesterunverträgliches Polymer ist ein COC. Die Folie eignet sich als abziehbare Folie (Deckelfolie) für Lebensmittelbehältnisse.

**Figur 1**

**Beschreibung**

Die Erfindung betrifft eine coextrudierte, siegel- und peelfähige, biaxial orientierte Polyesterfolie mit einer Basisschicht (B) und mindestens einer auf dieser Basisschicht (B) aufgebrachten Deckschicht (A). Die Deckschicht (A) enthält ein niedrigsiegelndes, peelfähiges Polymer, das eine hohe Klebeneigung zu metallischen Oberflächen, beispielsweise Walzen mit metallischen Oberflächen, aufweist. In der Basisschicht (B) ist neben Polyethylenterephthalat auch Polyethylenisophthalat enthalten, wodurch die Folie in Maschinenrichtung bei vergleichsweise niedrigen Temperaturen gestreckt werden kann. Hierdurch wird die Klebeneigung der Folie bei deren Herstellung reduziert. Die Erfindung betrifft weiterhin ein Verfahren zur Herstellung der Folie und ihre Verwendung.

In der Lebensmittelindustrie werden in großem Umfang sowohl flexible als auch starre Behältnisse (im folgenden gemeinsam als Substrate bezeichnet) mit abziehbaren Deckeln verwendet. Die Deckel haben die Aufgabe, das Füllgut vor mechanischer Beschädigung und Schmutz zu schützen und für eine gute Barriere gegen Wasserdampf und Sauerstoff zu sorgen. Zudem müssen die Deckel für den Verbraucher leicht zu öffnen, d. h. peelfähig sein. Die Deckel tragen dazu eine Schicht, die heißsiegelbar und peelfähig ist. Typische Werkstoffe für solche Deckel sind Aluminium, aber auch polymere Werkstoffe wie Polyester oder Polyolefine, die mit einer entsprechenden heißsiegelbaren und peelfähigen Beschichtung versehen sind.

In vielen Fällen bestehen diese Behältnisse aus Polymeren, die polarer Natur sind. Hierzu gehören insbesondere Behältnisse aus Polyester, PA (Polyamid) und PVC, Behältnisse aus anderen Materialien, z. B. Pappe, die mit Polyester laminiert oder beschichtet sind, und Behältnisse aus metallischen Werkstoffen wie z. B. Aluminium oder beschichtetes Aluminium. Für die heißsiegelbare und peelfähige Schicht werden bei Verwendung von Polyesterfolie als Deckelmaterial in der Regel solche Polymere eingesetzt, die sich durch eine geringe Kristallit-Schmelztemperatur bzw. durch eine niedrige Erweichungstemperatur (Vicat-Erweichungstemperatur) auszeichnen. Diese Schichten weisen jedoch als Nachteil bei der Herstellung der Deckelfolie allgemein eine hohe Klebeneigung zu metallischen oder keramischen Oberflächen, beispielsweise zu Walzen mit metallischen Oberflächen, auf. Die Klebeneigung von solchen Schichten nimmt stark mit der Temperatur dieser Schicht bzw. der Temperatur der mit dieser Schicht in Kontakt kommenden Oberfläche zu. Bei der Herstellung und Verarbeitung von solchen Folien mit hoher Klebeneigung können daher nur ganz bestimmte Verfahren eingesetzt werden.

Die heißsiegelbare und peelfähige Schicht wird nach dem Stand der Technik in der Regel mittels so genannter off-line-Methoden (d. h. in einem zusätzlichen, der Folienherstellung nachgeordneten Prozessschritt) z. B. auf eine Polyesterfolie aufgebracht. Bei dieser Methode wird zunächst z. B. eine Standardpolyesterfolie nach einem üblichen Verfahren hergestellt. Die so hergestellte Polyesterfolie wird in einem weiteren Verarbeitungsschritt in einer Beschichtungsanlage off-line mit einer heißsiegelbaren und peelfähigen Schicht beschichtet. Bei diesem Verfahren wird das heißsiegelbare und peelfähige Polymer zunächst in einem organischen Lösungsmittel aufgelöst. Die fertige Lösung wird dann über ein geeignetes Antragsverfahren (Messergießer, Rasterwalze, Düse) auf die Folie aufgetragen. In einem nachgeschalteten Trockenofen wird das Lösungsmittel verdunstet, und das peelfähige Polymer bleibt als feste Schicht auf der Folie zurück.

Solch ein off-line-Antrag einer Siegelschicht ist aus mehreren Gründen vergleichsweise kostspielig. Erstens muss die Beschichtung der Folie in mindestens einem separaten Schritt in einer speziellen Apparatur erfolgen. Zweitens muss das verdampfte Lösemittel wieder kondensiert und zurückgewonnen werden, um somit die Umwelt über die Abluft möglichst wenig zu belasten. Drittens ist ein großer Kontrollaufwand erforderlich, um sicherzustellen, dass der Restlösemittelgehalt in der Beschichtung möglichst gering ist.

Außerdem kann in einem wirtschaftlichen Verfahren das Lösemittel nie vollständig während der Trocknung aus der Beschichtung entfernt werden, insbesondere weil der Trocknungsvorgang nicht beliebig lang sein kann. In der Beschichtung verbleibende Spuren des Lösemittels migrieren anschließend in die Speisen, wo sie den Geschmack verfälschen oder sogar den Konsumenten gesundheitlich schädigen können.

Auf dem Markt werden verschiedene off-line hergestellte heißsiegelbare und peelfähige Polyesterfolien angeboten. Die Polyesterfolien unterscheiden sich im Aufbau und in der Zusammensetzung der Deckschicht (A). Einige Folien und Laminate, die gegen Substrate aus Polyester siegeln, sind bereits bekannt.

In der DE-A-101 28 711 wird eine coextrudierte, siegelfähige Polyolefinfolie beschrieben mit einer Deckschicht, die mindestens 70 Gew.-% eines Co- oder Terpolymeren enthält, welches aus Olefin und ungesättigter Carbonsäure oder deren Ester oder deren Anhydrid aufgebaut ist. Die Haftung dieser Folie gegenüber PP, PE, PET, PS, PVC, PC, Glas, Weißblech und Aluminium wird als gut beschrieben. Die Nachteile einer Polyolefinfolie gegenüber einer Polyethylenterephthalatfolie (PET-Folie) sind die schlechtere Barriere gegen Sauerstoff, die niedrigere Temperaturbeständigkeit und die schlechteren mechanischen Eigenschaften. So ist z. B. ein Siegeln von solchen Polyolefinfolien bei industriell üblichen Temperaturen von 160 °C und mehr nicht möglich.

Die EP-A-1471 096, EP-A-1 471 097, EP-A-1 475 228, EP-A-1 475 229, EP-A-1 471 094 und EP-A-1 471 098 beschreiben heißsiegelbare und gegenüber A/CPET peelfähige Polyesterfolien mit ABC-Aufbau, die zur Einstellung der gewünschten Peeleigenschaften in der peelfähigen und heißsiegelbaren Deckschicht amorphe, aromatische und aliphatische Copolyester und entweder ca. 2 bis 10 Gew.-% anorganische oder organische Partikel oder aber ein polyesterunverträgliches Polymer wie z. B. Norbornen/Ethylen enthalten. Die Folien zeichnen sich durch gute Peeleigenschaften gegen polare Substrate wie PET oder PVC aus, neigen aber bei ihrer Herstellung zum Anhaften oder Ankleben, insbesondere an Walzen mit keramischen oder metallischen Oberflächen.

Die EP-B-1 165 317 beschreibt eine heißsiegelbare Polyesterfolie, die aus einer amorphen Heißsiegelschicht und einer Basisschicht aufgebaut ist. Die Heißsiegelschicht umfasst einen Copolyester aus einem aliphatischen und einem cycloaliphatischen Diol mit einer oder mehreren Carbonsäuren. Die Basisschicht (= Substratschicht) umfasst einen Copolyester aus Terephthalsäure (TPA) und Isophthalsäure (IPA) mit einem oder mehreren Diolen, die ausgewählt sind aus aliphatischen und cycloaliphatischen Diolen. Die Folien zeichnen sich durch gute Siegeleigenschaften aus, insbesondere gegenüber metallischen Substraten. Sie besitzen jedoch unzureichende Peeleigenschaften gegenüber metallischen Substraten, insbesondere aber unzureichende Peeleigenschaften gegenüber Substraten, die polare Polymere enthalten bzw. aus solchen aufgebaut sind.

Aufgabe der vorliegenden Erfindung war es daher, eine heißsiegelbare und peelfähige Folie zur Verfügung zu stellen, die sich insbesondere durch sehr gute Peeleigenschaften zu polaren Substraten auszeichnet und die eine geringe Klebeneigung bei ihrer Herstellung, z. B. gegenüber metallischen und keramischen Oberflächen/Walzen, aufweist.

Unter heißsiegelbar wird die Eigenschaft einer Folie verstanden, die zumindest eine heißsiegelbare Deckschicht (A) aufweist, die mittels Siegelbacken durch Anwendung von Wärme (bevorzugt 130 bis 220 °C) und Druck (bevorzugt größer als 2 bar) in einer bestimmten Zeit (bevorzugt 0,2 bis 4 s) mit sich selbst bzw. mit einem Substrat verbunden werden kann, ohne dass dabei die Trägerschicht (= Basisschicht (B)) selbst plastisch wird.

Eine Aufgabe war es daher weiterhin, eine Folie bereitzustellen, die gegenüber polaren Substraten eine Mindestsiegeltemperatur von bevorzugt kleiner/gleich 140 °C, insbesondere kleiner/gleich 130 °C, besonders bevorzugt kleiner/gleich 120 °C, aufweist.

Unter peelfähig wird die Eigenschaft einer Folie verstanden, die zumindest eine heißsiegelbare und peelfähige Deckschicht (A) aufweist, die nach der Heißsiegelung auf ein Standardsubstrat derart wieder von dem Substrat abgezogen werden kann, dass dabei die Folie weder ein- noch abreißt. Der Verbund aus heißsiegelfähiger Folie und Substrat soll beim Abziehen der Folie von dem Substrat in der Naht zwischen der Heißsiegelschicht und der Substratoberfläche aufgehen.

Eine weitere Aufgabe war es daher, eine Folie bereitzustellen, die im gesamten Siegelbereich (bevorzugt Mindestsiegeltemperatur von 140 °C bis maximale Siegeltemperatur von 220 °C) peelfähig ist, d. h. beim Peelen weder ein- noch abreißt.

Zugleich war es eine andere Aufgabe der vorliegenden Erfindung, solche Peelfolien bereitzustellen, die eine geringe Klebeneigung zu keramischen, metallischen oder Metall enthaltenden Oberflächen, beispielsweise zu Walzen im Längsstreckwerk (= Streckwerk zur Streckung der Folie in Maschinenrichtung (MDO)), aufweisen, so dass zur Herstellung der Folie in der Industrie übliche Streckwerke verwendet werden können.

Zusammenfassend sollte sich die Folie gemäß der vorliegenden Erfindung durch die folgenden Eigenschaftskombinationen auszeichnen:

· Sie sollte gegenüber Substraten, aufgebaut aus polaren Polymeren, heißsiegelbar sein, d. h. eine Mindestsiegeltemperatur von bevorzugt kleiner/gleich 140 °C, insbesondere kleiner/gleich 130 °C und besonders bevorzugt kleiner/gleich 120 °C aufweisen.

· Sie sollte gegenüber Substraten, aufgebaut aus polaren Polymeren, im gesamten Siegelbereich (bevorzugt 140 °C bis 220 °C) peelen, d. h. die Peelkraft sollte größer/gleich 1,5 N je 15 mm, bevorzugt größer/gleich 2 N je 15 mm und besonders bevorzugt größer/gleich 2,5 N je 15mm Folienstreifenbreite sein.

· Die Folie sollte sich wirtschaftlich herstellen lassen. Die Siegelschicht sollte eine möglichst geringe Klebeneigung zu keramischen, metallischen oder Metall enthaltenden Oberflächen, beispielsweise zu Walzen in der Längsstreckung, aufweisen, womit zur Herstellung der Folie in der Industrie übliche Streckwerke eingesetzt werden könnten.

· Weiterhin sollte die Folie bei heute üblichen Maschinengeschwindigkeiten von bis zu 500 m/min herstellbar und zudem regenerierbar (rezyklierbar) sein.

· Des Weiteren sollte eine gute Haftung (bevorzugt größer als 2 N/15 mm Folienbreite) zwischen den einzelnen Schichten der Folie ohne Applikation eines zusätzlichen Klebers für deren praktische Anwendung gewährleistet sein.

Gelöst wird die Aufgabe durch die Bereitstellung einer coextrudierten, biaxial orientierten Polyesterfolie, umfassend eine Basisschicht (B) und eine Deckschicht (A), wobei

a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und

b) die Deckschicht (A)

58 bis 97 Gew.-% Polyester,
2 bis 40 Gew.-% polyesterunverträgliches Polymer (= anti-PET-Polymer) und
1 bis 10 Gew.-% anorganische und/oder organische Partikel mit einem mittleren Durchmesser $d_{50}$ von 2 bis 8 $\mu$m enthält, wobei
b1) der Polyester zu 20 bis 85 Mol-% aus Einheiten aufgebaut ist, die auf mindestens eine aromatische Dicarbonsäure zurückgehen, und zu 15 bis 80 Mol-% aus Einheiten aufgebaut ist, die auf mindestens eine aliphatische Dicarbonsäure zurückgehen, wobei die Summe der dicarbonsäureabgeleiteten Molprozente 100 % ergibt.

Bei der Angabe der Molprozente in Polymeren bzw. Copolymeren beziehen sich diese - sofern nichts anderes gesagt ist - auf die von den genannten Monomeren abgeleiteten Einheiten im Polymeren bzw. Copolymeren. Gleiches gilt für die Beschreibung des strukturellen Aufbaus der Polymere bzw. Copolymere selbst.

Die Gew.-%-Angaben beziehen sich hier und im folgenden, soweit nicht anders angegeben, auf die Masse der jeweiligen Schicht der erfindungsgemäßen Folie.

Die heißsiegelbare und peelfähige Deckschicht (A) zeichnet sich durch charakteristische Merkmale aus. Sie besitzt eine Siegelanspringtemperatur (= Mindestsiegeltemperatur) gegenüber Substraten aus polaren Polymeren von bevorzugt nicht mehr als 140 °C, insbesondere nicht mehr als 130 °C und besonders bevorzugt nicht mehr als 120 °C, und eine Siegelnahtfestigkeit gegenüber diesen von bevorzugt mindestens 1,5 N, insbesondere mindestens 2 N und besonders bevorzugt von mindestens 2,5 N (bezogen auf 15 mm Folienbreite). Die heißsiegelbare und peelfähige Deckschicht (A) hat gegenüber Substraten aus polaren Polymeren eine maximale Siegeltemperatur von bevorzugt 220 °C, wobei im gesamten Siegelbereich (Mindestsiegeltemperatur bis maximale Siegeltemperatur) eine gegenüber Substraten aus polaren Polymeren peelfähige Folie erhalten wird.

Die Folie nach der vorliegenden Erfindung umfasst eine Basisschicht (B) und mindestens eine erfindungsgemäße Deckschicht (A). In diesem Fall ist die Folie zweischichtig aufgebaut. In einer bevorzugten Ausführungsform ist die Folie drei- oder mehr als dreischichtig aufgebaut. Im Falle der besonders bevorzugten dreischichtigen Ausführungsform besteht sie dann aus der Basisschicht (B), der erfindungsgemäßen Deckschicht (A) und einer der Deckschicht (A) gegenüberliegenden Deckschicht (C) - Schichtaufbau A-B-C. Bei einer vierschichtigen Ausführungsform enthält die Folie eine Zwischenschicht (D) zwischen der Basisschicht (B) und der Deckschicht (A) oder (C).

Die Basisschicht (B) der Folie besteht bevorzugt zu mindestens 80 Gew.-% aus thermoplastischem Polyester. Erfindungsgemäß besteht die Basisschicht (B) überwiegend (zu größer als 50 Gew.-%, bevorzugt zu mehr als 80 Gew.-%) aus einem Copolyester, der überwiegend aus Isophthal- und Terephthalsäure-Einheiten und aus Ethylenglykol-Einheiten zusammengesetzt ist. Überwiegend bedeutet hier, dass der Copolyester bevorzugt zu >50 Mol-%, besonders bevorzugt zu >70 Mol-% und ganz besonders bevorzugt zu >90 Mol-%, Ethylenterephthalat-und Ethylenisophthalat-Einheiten enthält. Die restlichen Monomereinheiten stammen aus anderen aliphatischen, cycloaliphatischen oder aromatischen Diolen bzw. Dicarbonsäuren. Die bevorzugten Copolyester, die die gewünschten Folieneigenschaften bereitstellen, sind solche, die ausschließlich aus Ethylenterephthalat- und Ethylenisophthalat-Einheiten aufgebaut sind. Der Anteil an Ethylenterephthalat beträgt bevorzugt 85 bis 97 Mol-% und der entsprechende Anteil an Ethylenisophthalat 3 bis 15 Mol-%. Bevorzugt sind weiterhin Copolyester, bei denen der Anteil an Ethylenterephthalat 90 bis 97 Mol-% und der entsprechende Anteil an Ethylenisophthalat 3 bis 10 Mol-% beträgt, und ganz besonders bevorzugt sind Copolyester, bei denen der Anteil an Ethylenterephthalat 92 bis 97 Mol-% und der entsprechende Anteil an Ethylenisophthalat 3 bis 8 Mol-% beträgt. (Bei der Angabe der Mengen für die Dicarbonsäuren bildet die Gesamtmenge aller Dicarbonsäuren 100 Mol-%. Analog bildet die Gesamtmenge aller Diole auch 100 Mol-%.)

Für die Basisschicht (B) können auch Mischungen verschiedener Polyester bzw. Copolyester verwendet werden.

Geeignete andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenyl-acetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die (C3-C19)-Alkandisäuren besonders geeignet, wobei der Alkananteil geradkettig oder verzweigt sein kann.

Geeignete andere aliphatische Diole sind beispielsweise Diethylenglykol, Triethylenglykol, aliphatische Glykole der allgemeinen Formel HO-$(CH_2)_n$-OH, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoffatomen, cycloaliphatische, gegebenenfalls heteroatomhaltige Diole mit einem oder mehreren Ringen. Von den cycloaliphatischen Diolen sind Cyclohexandiole (insbesondere Cyclohexan-1,4-diol) zu nennen. Geeignete andere aromatische Diole entsprechen beispielsweise der Formel HO-$C_6H_4$-X-$C_6H_4$-OH, wobei X für -$CH_2$-, -$C(CH_3)_2$-, -$C(CF_3)_2$-, -O-, -S- oder -$SO_2$- steht. Daneben sind auch Bisphenole der Formel HO-$C_6H_4$-$C_6H_4$-OH gut geeignet.

Die Herstellung der erfindungsgemäßen Polyester kann nach dem Umesterungsverfahren erfolgen. Dabei geht man von Dicarbonsäureestern und Diolen aus, die mit den üblichen Umesterungskatalysatoren wie Zink-, Calcium-, Lithium-, Magnesium- und Mangan-Salzen umgesetzt werden. Die Zwischenprodukte werden dann in Gegenwart allgemein üblicher Polykondensationskatalysatoren wie Antimontrioxid, Titanoxide oder Ester sowie Germanium- und Aluminium-Verbindungen polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Durch die erfindungsgemäße Auswahl der Polymere für die Basisschicht (B) wird die Herstellbarkeit der an sich zum Kleben neigenden Peelfolie deutlich verbessert. Besonders in der Längsstreckung, in der die Folie in Maschinenrichtung gestreckt wird, wird durch die erfindungsgemäße Auswahl der Polymere für die Basisschicht (B) die Klebeneigung der Folie deutlich reduziert. Bei sonst gleichen Streckbedingungen können die Strecktemperaturen deutlich herabgesetzt werden. So können gegenüber einer Standardpolyesterfolie, bei der in der Basisschicht (B) Polyethylenterephthalat verwendet wird, die Temperaturen in der Längsstreckung (Aufheiz- und Strecktemperaturen) in einem Bereich von 5 bis 25 °C reduziert und damit die Klebeneigung der Folie während der Herstellung deutlich verringert werden.

Es hat sich herausgestellt, dass (bei konstanter, d. h. gleichleibender Zusammensetzung der peelfähigen Deckschicht (A)) die wesentlichen Einflussgrößen auf die Klebrigkeit der Folie die Verfahrensparameter in der Längsstreckung sind. Zu den Verfahrensparametern gehören insbesondere die Strecktemperatur $T_{MD}$, das Streckverhältnis $\lambda_{MD}$, die Folienbahngeschwindigkeit und eventuell die Art der Streckung (MD = Streckung in Längs- oder Maschinenrichtung).

Übliche Werte für die genannten Parameter bei nicht erfindungsgemäßen Folien sind z. B.

| Aufheiztemperaturen | 60 (Eingang Aufheizung) bis 120 °C (Ausgang Aufheizung) |
|---|---|
| Strecktemperaturen | 100 bis 115 °C |
| Streckverhältnisse | 3,0 bis 5,0 |

Bei den erfindungsgemäßen Folien liegen - bedingt durch die spezielle Zusammensetzung der Basisschicht (B) - die Temperaturen und Streckverhältnisse dagegen innerhalb von Bereichen, wie sie die unten stehende Tabelle wiedergibt.

| Aufheiztemperaturen | 60 (Eingang Aufheizung) bis 95 °C (Ausgang Aufheizung) |
|---|---|
| Strecktemperaturen | 75 bis 95 °C |
| Streckverhältnisse | 2,0 bis 4,5 |

Die genannten Daten beziehen sich bei der Längsstreckung auf die so genannte NTEP-Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegebenen Temperaturen beziehen sich auf die jeweiligen Walzentemperaturen, die mittels IR gemessen wurden.

Es hat sich gezeigt, dass sich die Folie bei Verwendung der erfindungsgemäßen Konzentrationen für die Ethylenterephthalat- und Ethylenisophthalat-Einheiten im Copolymeren für die Basisschicht (B) bei den genannten niedrigen Strecktemperaturen unproblematisch und verfahrenssicher herstellen lässt, da sich insbesondere bei diesen gegenüber dem Stand der Technik niedrigeren Strecktemperaturen die Klebeneigung einer Folie bei unveränderter Peelschicht (A) deutlich verringert.

Wird dagegen in der Basisschicht (B) ein Polymer verwendet, bei dem der Anteil an Ethylenisophthalat im Copolymeren kleiner als 3 Mol-% ist, so lassen sich die Folien bei den zur Reduzierung der Klebeneigung der Deckschicht (A) geforderten niedrigen Längsstrecktemperaturen nicht mehr verfahrenssicher herstellen. Die Folie reißt in der Längsstreckung häufig ab und wickelt sich im ungünstigsten Fall um die Streckwalzen, was einen Wechsel der Walzen zur Folge hat.

Wird andererseits in der Basisschicht (B) der Anteil an Ethylenisophthalat im Copolymeren über den Erfindungsbereich erhöht, so verliert die Folie ihre mechanischen Eigenschaften, was unerwünscht ist. Ebenso wird hierdurch ihr Schrumpf erhöht, was ebenfalls unerwünscht ist.

Die durch Coextrusion bevorzugt auf die Basisschicht (B) aufgebrachte siegelbare und peelfähige Deckschicht (A) besteht zur Erzielung der gewünschten Peeleigenschaften aus einem Polymer mit niedrigem Erweichungspunkt.

Erfindungsgemäß ist die Vicat-Erweichungstemperatur der peelfähigen Deckschicht (A) bevorzugt kleiner als 70 °C, besonders bevorzugt kleiner als 65 °C und ganz besonders bevorzugt kleiner als 60 °C. Ist die Vicat-Erweichungstemperatur der peelfähigen Deckschicht (A) größer als 70 °C, so verliert die Folie ihre erfindungsgemäßen Peeleigenschaften.

Das Material (Polymer) der Deckschicht (A) besteht zu 58 bis 97 Gew.-% aus Polyester. Der Polyester ist aufgebaut aus Einheiten, die von aromatischen und aliphatischen Dicarbonsäuren abgeleitet sind. Die auf die aromatischen Dicarbonsäuren zurückgehenden Einheiten sind in dem Polyester in einer Menge von 20 bis 85 Mol-%, bevorzugt 25 bis 80 Mol-%, besonders bevorzugt 30 bis 75 Mol-% enthalten. Die auf die aliphatischen Dicarbonsäuren zurückgehenden Einheiten sind in dem Polyester in einer Menge von 15 bis 80 Mol-%, bevorzugt 20 bis 75 Mol-%, besonders bevorzugt 25 bis 70 Mol-% enthalten, wobei die Mol-%-Angaben sich immer zu 100 % ergänzen. Die hierzu korrespondierenden Dioleinheiten ergeben ebenfalls immer 100 Mol-%.

Bevorzugte aliphatische Dicarbonsäuren sind Pimelinsäure, Korksäure, Azelainsäure, Sebazinsäure, Glutarsäure und Adipinsäure. Insbesondere bevorzugt sind die Azelainsäure, die Sebazinsäure und die Adipinsäure.

Bevorzugte aromatische Dicarbonsäuren sind Terephthalsäure, Isophthalsäure und 2,6-Naphthalindicarbonsäure, insbesondere Terephthalsäure und Isophthalsäure. Bevorzugte Diole sind Ethylenglykol, Butylenglykol und Neopentylglykol.

Im Allgemeinen beinhaltet der Polyester die folgenden Dicarboxylate und Alkylene, jeweils bezogen auf die Gesamtdicarboxylat- bzw. Gesamtalkylenmenge:

- 20 bis 85 Mol-%, bevorzugt 20 bis 70 Mol-% und besonders bevorzugt 25 bis 65 Mol-% Terephthalat,
- 0 bis 30 Mol-%, bevorzugt 5 bis 25 Mol-% und besonders bevorzugt 5 bis 20 Mol-% Isophthalat,
- 5 bis 75 Mol -%, bevorzugt 10 bis 70 Mol-% und besonders bevorzugt 15 bis 65 Mol-% Azelat,
- 0 bis 50 Mol-%, bevorzugt 0 bis 40 Mol-% und besonders bevorzugt 0 bis 30 Mol-% Sebazat,
- 0 bis 50 Mol-%, bevorzugt 0 bis 40 Mol-% und besonders bevorzugt 0 bis 30 Mol-% Adipat,
- mehr als 30 Mol -%, bevorzugt mehr als 40 Mol-% und besonders bevorzugt mehr als 50 Mol-% Ethylen oder Butylen.

2 bis 40 Gew.-%, bevorzugt 5 bis 38 Gew.-% und besonders bevorzugt 8 bis 36 Gew.-%, des Deckschichtmaterials (A) bestehen aus einem Polymer, welches mit dem Polyester unverträglich (= sog. anti-PET-Polymer) ist.

1 bis 10 Gew.-% des Materials der Deckschicht(A) besteht aus anorganischen und/oder organischen Partikeln mit einem mittleren Durchmesser $d_{50}$ von 2 bis 8 $\mu$m.

Beträgt der Anteil des Polyesters in der siegelbaren und peelfähigen Deckschicht (A) weniger als 58 Gew.-%, so wird die geforderte Peelkraft zum Substrat nicht mehr erreicht und die Haftung der Deckschicht (A) zur Basisschicht (B) ist zu gering. Bei der Herstellung der Folie lösen sich in der Längsstreckung Teile der Deckschicht (A) von der Basisschicht (B) und bleiben an den Aufheiz- oder Streckwalzen haften, was unerwünscht ist. Beträgt der maximale Anteil des Polyesters in der siegelbaren und peelfähigen Deckschicht (A) mehr als 97 Gew.-%, so neigt die Folie stärker zum Verblocken/Verkleben an den Aufheiz- oder Streckwalzen, was zu Abrissen führen kann, was ebenfalls unerwünscht ist.

Erfindungsgemäß enthält die heißsiegelbare und peelfähige Deckschicht (A) ein mit Polyester unverträgliches Polymer (anti-PET-Polymer) in einer Konzentration von 2 bis 40 Gew.-%, bevorzugt 5 bis 38 Gew.-%, besonders bevorzugt 8 bis 36 Gew.-%, ganz besonders bevorzugt 10 bis 30 Gew.-%, bezogen auf die Masse der Deckschicht (A).

Beispiele für geeignete unverträgliche Polymere (anti-PET-Polymere) sind Polymere auf Basis von Ethylen (z. B. LLDPE, HDPE), Propylen (PP), Cycloolefinen (CO), Amiden (PA) oder Styrol (PS). In einer bevorzugten Ausführungsform wird als polyesterunverträgliches Polymer (anti-PET-Polymer) ein Copolymeres verwendet. Beispiele hierfür sind Copolymere auf Basis von Ethylen (C2/C3, C2/C3/C4-Copolymere), Propylen (C2/C3, C2/C3/C4-Copolymere), Butylen (C2/C3, C2/C3/C4-Copolymere) oder auf Basis von Cycloolefinen (Norbornen/Ethylen-, Tetracyclododecen/ Ethylen-Copolymere). In einer der besonders bevorzugten Ausführungsformen ist das mit Polyester unverträgliche Polymer (anti-PET-Polymer) ein Cycloolefincopolymer (COC). Solche Cycloolefincopolymere sind beispielsweise in der EP-A-1 068 949 oder in der JP 05-009319 beschrieben, auf die hier Bezug genommen wird.

Unter den Cycloolefincopolymeren sind insbesondere diejenigen bevorzugt, die polymerisierte Einheiten polycyclischer Olefine mit Norbornengrundstruktur, besonders bevorzugt Norbornen oder Tetracyclododecen, enthalten. Besonders bevorzugt sind Cycloolefincopolymere (COCs), die polymerisierte Einheiten acyclischer Olefine, insbesondere Ethylen, enthalten. Ganz besonders bevorzugt sind Norbonen/Ethylen- und Tetracyclododecen/Ethylen-Copolymere, welche 5 bis 80 Gew.-% Ethylen-Einheiten, vorzugsweise 10 bis 60 Gew.-% Ethylen-Einheiten enthalten (bezogen auf die Masse des Copolymeren).

Die Cycloolefinpolymere weisen im Allgemeinen Glasübergangstemperaturen zwischen -20 und 400 °C auf. Für die Erfindung sind insbesondere solche Cycloolefincopolymerisate (COCs) geeignet, die eine Glasübergangstemperatur von kleiner als 160 °C, bevorzugt kleiner als 120 °C und besonders bevorzugt kleiner als 80 °C, aufweisen. Vorzugsweise sollte die Glasübergangstemperatur oberhalb von 50 °C liegen, bevorzugt oberhalb von 55 °C, insbesondere oberhalb von 60 °C. Die Viskositätszahl (Dekalin, 135 °C, DIN 53 728) liegt zweckmäßigerweise zwischen 0,1 und 200 ml/g, bevorzugt zwischen 50 und 150 ml/g. Folien, die ein COC mit einer Glasübergangstemperatur von kleiner als 80 °C enthalten, zeichnen sich gegenüber solchen, die ein COC mit einer Glasübergangstemperatur von größer 80 °C enthalten, durch verbesserte optische Eigenschaften, insbesondere durch eine niedrigere Trübung aus.

Die Herstellung der Cycloolefincopolymere (COCs) geschieht durch eine heterogene oder homogene Katalyse mit metallorganischen Verbindungen und ist in einer Vielzahl von Dokumenten beschrieben. Geeignete Katalysatorsysteme, basierend auf Mischkatalysatoren aus Titan- bzw. Vanadiumverbindungen in Verbindung mit Aluminiumorganylen, werden in der DD 109 224, DD 237 070 und der EP-A-0 156 464 beschrieben.

EP-A-0 283 164, EP-A-0 407 870, EP-A-0 485 893 und EP-A-0 503 422 beschreiben die Herstellung von Cycloolefincopolymeren (COCs) mit Katalysatoren basierend auf löslichen Metallocenkomplexen. Auf Cycloolefincopolymere, hergestellt mit Katalysatoren, die auf löslichen Metallocenkomplexen basieren, wird besonders bevorzugt zurückgegriffen. Solche COCs sind käuflich erhältlich; z. B. Topas® (Topas Advanced Polymers GmbH, Frankfurt, DE).

Beträgt der Anteil des polyesterunverträglichen Polymeren (anti-PET-Polymer) weniger als 2 Gew.-%, bezogen auf das Gewicht der Deckschicht (A), so ist ein positiver Einfluss des anti-PET-Polymeren auf das Abziehverhalten der Folie von der Menüschale nicht mehr gegeben. In diesem Fall neigt die Folie beim Abziehen von der Menüschale dann nach wie vor zum Einreißen oder zum Abreißen. Dies gilt sowohl für eine Heißpeelbarkeit (hot peel), insbesondere aber für eine Peelbarkeit der Folie im kalten Zustand (cold peel), z. B. kurz nach der Herausnahme des geschlossenen Behältnisses aus dem Kühlschrank oder aus der Gefriertruhe. Gerade im letzten Fall neigen Peel-Folien verstärkt zum Einreißen, was aber unerwünscht ist. Erfindungsgemäß hergestellte Folien reißen beim Abziehen von der Menüschale auch dann nicht ein oder ab. Andererseits sollte der Anteil von polyesterunverträglichem Polymer (anti-PET-Polymer) 40 Gew.-% nicht überschreiten, da die Trübung der Folie sonst zu hoch wird.

Die Deckschicht (A) besteht überwiegend aus den beschriebenen Materialien. "Überwiegend" bedeutet, dass sie bevorzugt zu mindest 90 Gew.-% aus diesen Materialien besteht. Bis zu 10 Gew.-% an Additiven können in dieser Schicht vorhanden sein.

Die heißsiegelbare und peelfähige Deckschicht (A) enthält erfindungsgemäß des Weiteren anorganische und/ oder organische Partikel (auch als "Pigmente" oder "Antiblockmittel" bezeichnet) in einer Konzentration von 1 bis 10 Gew.-%, bezogen auf die Masse der Deckschicht (A). In einer bevorzugten Ausführungsform enthält die Deckschicht (A) anorganische und/oder organische Partikel in einer Konzentration von 1,5 bis 9 Gew.-%. In einer besonders bevorzugten Ausführungsform enthält die Deckschicht (A) anorganische und/oder organische Partikel in einer Konzentration von 2 bis 8 Gew.-%.

Übliche Partikel sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Titandioxid, Kaolin oder vernetzte Polystyrol- oder Arcrylat-Partikel. Die Partikel können der Schicht in den jeweils vorteilhaften Konzentrationen, z. B. als glykolische Dispersion während der Polykondensation oder über Masterbatche bei der Extrusion, zugegeben werden.

Erfindungsgemäß bevorzugte Partikel sind synthetisch hergestellte, amorphe $SiO_2$-Partikel in kolloidaler Form. Diese Partikel werden hervorragend in die Polymermatrix eingebunden und erzeugen nur wenige Vakuolen (Hohlräume). Vakuolen entstehen an den Partikeln bei der biaxialen Orientierung, verursachen im Allgemeinen Trübung und sind daher für die vorliegende Erfindung nicht erwünscht. Geeignete Partikel können z. B. über die Firmen Grace, Fuji, Degussa oder Ineos bezogen werden.

Die Teilchen haben einen mittleren Partikeldurchmesser $d_{50}$ von 2 bis 8 $\mu$m. In einer bevorzugten Ausführungsform haben die Teilchen einen mittleren Partikeldurchmesser $d_{50}$ von 2,5 bis 7 $\mu$m, und in einer besonders bevorzugten Ausführungsform haben die Teilchen einen mittleren Partikeldurchmesser $d_{50}$ von 3 bis 6 $\mu$m.

Um das Verarbeitungsverhalten der Folie nach der vorliegenden Erfindung weiterhin zu verbessern, ist es günstig, wenn das Verhältnis aus Partikeldurchmesser und Schichtdicke im Bereich von 0,5 bis 4, bevorzugt im Bereich von 1 bis 3,5 und besonders bevorzugt im Bereich von 1,5 bis 3,0, liegt.

Weiterhin ist es von Vorteil, in die Basisschicht (B) bei einem zweischichtigen Folienaufbau (AB) bzw. in die bevorzugt nicht siegelfähige Deckschicht (C) bei einem dreischichtigen Folienaufbau (ABC) ebenfalls Partikel einzuarbeiten.

Bei der zweischichtigen und der besonders vorteilhaften dreischichtigen Ausführungsform der erfindungsgemäßen Folie liegt die Dicke der Deckschicht (A) bevorzugt im Bereich von 0,8 bis 5 $\mu$m, insbesondere im Bereich von 0,9 bis 4,8 $\mu$m und besonders bevorzugt im Bereich von 1 bis 4,6 $\mu$m. Beträgt die Dicke der Deckschicht (A) dagegen weniger 0,8 $\mu$m, so ist die Folie gegenüber den genannten polaren Substraten u. U. nicht mehr heißsiegelbar.

Die Dicke der anderen, bevorzugt nicht siegelbaren Deckschicht (C) kann gleich der Deckschicht (A) sein oder von dieser verschieden; ihre Dicke liegt im Allgemeinen zwischen 1 und 20 $\mu$m. Die Zusammensetzung der Schicht (C) ist in der Regel von der der Schicht (A) verschieden. Sie besteht überwiegend aus thermoplastischem Polyester oder Copolyester, insbesondere überwiegend aus PET.

Die Gesamtdicke der erfindungsgemäßen Polyesterfolie kann innerhalb eines allgemeinen Dickenbereichs von 5 bis 500 $\mu$m variieren. Für den Anwendungsbereich Peelfolie sind jedoch Foliendicken von 5 bis 100 $\mu$m, insbesondere 7 bis 80 $\mu$m und vorzugsweise 10 bis 70 $\mu$m, zu verwenden.

In einer bevorzugten Ausführungsform der Folie gemäß der vorliegenden Erfindung enthält die Basisschicht (B) zumindest ein weißfärbendes Pigment in einer Konzentration von bevorzugt 3 bis 20 Gew.-%, vorzugsweise 4 bis 18 Gew.-%. Die Konzentration wird dabei erfindungsgemäß so gewählt, dass der Weißgrad der Folie (nach Berger) bevorzugt größer als 70 % ist. Im anderen Fall ist die Folie für die gedachten Anwendungen (z. B. gesiegelte Deckelfolie auf Becher) bezüglich der optischen Eigenschaften weniger geeignet, da sie zu durchscheinend ist.

Zur Erzielung der vorgenannten Eigenschaften, insbesondere des gewünschten Weißgrades der Folie, werden bevorzugt sowohl in die Basisschicht (B) als auch in die Deckschicht (C) die notwendigen Pigmente eingearbeitet. In Frage kommen z. B. Titandioxid, Calciumcarbonat, Bariumsulfat, Zinksulfid oder Zinkoxid. In bevorzugter Weise wird $TiO_2$ als alleiniges weißfärbendes Pigment verwendet. Es wird bevorzugt als Extrusionsmasterbatch (die Titandioxid-Konzentration ist hier deutlich höher als in der biaxial orientierten Folie) dem Originalrohstoff zugegeben. Typische Werte für die $TiO_2$-Konzentration im Extrusionsmasterbatch sind 50 Gew.-% Titandioxid. Das Titandioxid kann sowohl vom Rutil-Typ als auch vom Anatas-Typ sein. Vorzugsweise wird Titandioxid vom Rutil-Typ verwendet. Die Korngröße des Titandioxids liegt in der Regel zwischen 0,05 und 0,5 $\mu$m, bevorzugt zwischen 0,1 und 0,3 $\mu$m. Die Folie erhält durch die eingearbeiteten Pigmente ein brillantes weißes Aussehen. Um zu dem gewünschten Weißgrad (bevorzugt >70 %) und zu der gewünschten niedrigen Transparenz (bevorzugt <50 %) zu gelangen, sollte die Basisschicht (B) hochgefüllt sein. Die Partikelkonzentration zur Erzielung der gewünschten niedrigen Transparenz liegt bevorzugt bei größer/gleich 3 Gew.-%, jedoch kleiner/gleich 20 Gew.-%, vorzugsweise über 4 Gew.-%, jedoch unterhalb 18 Gew.-%, bezogen auf das Gesamtgewicht der Basisschicht (B).

Zu einer weiteren Steigerung des Weißgrades können der Basisschicht und/oder den anderen Schichten geeignete optische Aufheller zugesetzt werden. Geeignete optische Aufheller sind beispielsweise Hostalux KS (Firma: Clariant, DE) oder Eastobrite OB-1 (Firma: Eastman, USA).

Es wurde gefunden, dass bei der bevorzugten Verwendung von im Wesentlichen $TiO_2$ als einfärbendem Weißpigment die Folie weniger anfällig gegenüber Einreißen und Delaminierung wird. Die Zugabe des $TiO_2$ bevorzugt über die Masterbatchtechnologie hat den Vorteil, dass Farbunterschiede z. B. durch nicht konstante Regenerateigenschaften relativ leicht korrigiert werden können. Bei Verwendung von $TiO_2$ als alleinigem Pigment wird die Folie besonders glatt und damit glänzender, neigt aber eventuell zum Verblocken.

Die Basisschicht und die anderen Schichten können zusätzlich übliche Additive wie Stabilisatoren (UV, Hydrolyse), flammhemmende Stoffe oder Füller enthalten. Sie werden zweckmäßig dem Polymer bzw. der Polymermischung bereits vor dem Aufschmelzen zugesetzt. Die Deckschicht (C) kann insbesondere einfärbende Pigmente und/oder Antiblockmittel bevorzugt in den für die Schichten (B) und (A) angegebenen Konzentrationen enthalten.

Die Erfindung betrifft auch ein Verfahren zur Herstellung der erfindungsgemäßen Polyesterfolie nach dem an sich aus der Literatur ("Handbook of Thermoplastic Polyesters, Ed. S. Fakirov, Wiley-VCH, 2002", oder im Kapitel "Polyesters, Films" in der "Encyclopedia of Polymer Science and Engeneering, Vol. 12, John Wiley & Sons, 1988") bekannten Extrusions- bzw. Coextrusionsverfahren.

Im Rahmen dieses Verfahrens wird so vorgegangen, dass die der Folie entsprechenden Schmelzen durch eine Flachdüse coextrudiert werden, die so erhaltene Folie zur Verfestigung auf einer oder mehreren Walzen abgezogen wird, die Folie anschließend biaxial gestreckt (orientiert) wird, die biaxial gestreckte Folie thermofixiert und gegebenenfalls an der zur Behandlung vorgesehenen Oberflächenschicht noch corona- oder flammbehandelt wird.

Die biaxiale Streckung (Orientierung) wird im Allgemeinen aufeinander folgend durchgeführt, wobei dann die aufeinander folgende biaxiale Streckung, bei der zuerst längs (in Maschinenrichtung) und dann quer (senkrecht zur Maschinenrichtung) gestreckt wird, bevorzugt ist.

Zunächst wird, wie beim Extrusionsverfahren üblich, das Polymere bzw. die Polymermischung für die Folie in einem Extruder komprimiert und verflüssigt, wobei die gegebenenfalls als Zusätze vorgesehenen Additive bereits im Polymer bzw. in der Polymermischung enthalten sein können. Die Schmelze wird dann durch eine Flachdüse (Breitschlitzdüse) gepresst, und die ausgepresste Schmelze wird auf einer oder mehreren gekühlten Abzugswalzen abgezogen, wobei die Schmelze abkühlt und sich zu einer Vorfolie verfestigt. Beim Coextrusionsverfahren gilt dies analog für die verschiedenen Schichten der Folie, die übereinander durch eine entsprechende Flachdüse gepresst / coextrudiert werden.

Die biaxiale Streckung wird im Allgemeinen aufeinander folgend (sequentiell) durchgeführt. Dabei wird die Vorfolie vorzugsweise zuerst in Längsrichtung (d. h. in Maschinenrichtung = MD-Richtung) und anschließend in Querrichtung (d. h. senkrecht zur Maschinenrichtung = TD-Richtung) gestreckt. Dies führt zu einer räumlichen Ausrichtung (Orientierung) der Polymerketten. Das Strecken in Längsrichtung lässt sich mit Hilfe zweier entsprechend dem angestrebten Streckverhältnis verschieden schnell rotierender Walzen durchführen. Zum Querstrecken benutzt man allgemein einen entsprechenden Kluppenrahmen, in dem die Folie an beiden Rändern eingespannt und dann bei erhöhter Temperatur nach beiden Seiten gezogen wird.

Die Temperaturen, bei der die biaxiale Streckung durchgeführt wird, richten sich bei der Längsstreckung insbesondere nach den Eigenschaften der siegelbaren und peelfähigen Deckschicht (A). Erfindungsgemäß wird die Längsstreckung bei einer Temperatur in einem Bereich von bevorzugt 60 bis 95 °C durchgeführt, wobei die Aufheiztemperaturen im Bereich von 60 bis 95°C und die Strecktemperaturen im Bereich von 75 bis 95°C liegen. Die Temperatur, bei der die Streckung in Querrichtung durchgeführt wird, kann in einem relativ großen Bereich variieren und richtet sich nach den gewünschten Eigenschaften der Folie. Sie liegt bevorzugt in einem Temperaturbereich von 90 °C (Beginn der Streckung) bis 140 °C (Ende der Streckung). Das Längsstreckverhältnis liegt allgemein im Bereich von 2:1 bis 4,5:1, bevorzugt von 2,1:1 bis 4:1 und besonders bevorzugt von 2,2:1 bis 3,5:1. Das Querstreckverhältnis liegt allgemein im Bereich von 3:1 bis 5:1, bevorzugt von 3,5:1 bis 4,5:1.

Bei der nachfolgenden Thermofixierung wird die Folie (Schicht (C)) über eine Zeitdauer von etwa 0,1 bis 10 s bei einer Temperatur im Bereich von ca. 150 bis 250 °C gehalten. Anschließend wird die Folie in üblicher Weise aufgewickelt.

Nach der biaxialen Streckung kann die nicht siegelfähige Seite der Folie (Schicht (C)) nach einer der bekannten Methoden corona- oder flammbehandelt werden. Die Behandlungsintensität wird so eingestellt, dass sich eine Oberflächenspannung im Bereich von über 45 mN/m einstellt.

Zur Einstellung weiterer gewünschter Eigenschaften kann die Folie zusätzlich beschichtet werden. Typische Beschichtungen sind haftvermittelnd, antistatisch, schlupfverbessernd, hydrophil oder dehäsiv wirkend. Es bietet sich an, diese zusätzlichen Schichten über In-line-Beschichtung mittels wässriger Dispersionen nach dem Streckschritt in Längsrichtung und vor dem Streckschritt in Querrichtung auf die Folie aufzubringen.

Der Glanz der Folienoberfläche (B) im Falle einer zweischichtigen Folie bzw. der Glanz der Folienoberfläche (C) bei einer dreischichtigen Folie ist bevorzugt größer als 40 (gemessen nach DIN 67530 in Anlehnung an ASTM-D 523-78 und ISO 2813 mit Einstrahlwinkel 20°). In einer bevorzugten Ausführungsform beträgt der Glanz dieser Seiten mehr als 50 und in einer besonders bevorzugten Ausführungsform mehr als 60. Diese Folienoberflächen eignen sich daher insbesondere für eine weitere funktionelle Beschichtung, für die Bedruckung oder für die Metallisierung.

Die erfindungsgemäße Folie eignet sich hervorragend zum Verpacken von Nahrungs- und Genussmitteln, insbesondere zur Verpackung von Fertiggerichten in Menüschalen (trays), bei denen peelfähige Polyesterfolien zum Öffnen der Verpackung verwendet werden.

Die nachstehende Tabelle (Tabelle 1) fasst die bevorzugten Folieneigenschaften noch einmal zusammen:

**Tabelle 1**

| Deckschicht (A) | bevorzugt | besonders bevorzugt | ganz besonders bevorzugt | Einheit | Messmethode |
|---|---|---|---|---|---|
| Anteil Polyester | 58 bis 95 | 60 bis 88 | 62 bis 88 | Gew.-% | |
| Anteil Einheiten im Polyester, aufgebaut auf aromatischen Dicarbonsäuren | 20 bis 85 | 25 bis 80 | 30 bis 75 | Mol-% | |
| Anteil Einheiten im Polyester, aufgebaut auf aliphatischen Dicarbonsäuren | 15 bis 80 | 20 bis 75 | 25 bis 70 | Mol-% | |
| Anteil anti-PET-Polymer | 5 bis 38 | 8 bis 36 | 10 bis 30 | Gew.-% | |
| Füllstoffkonzentration (Partikel) | 1 bis 10 | 1,5 bis 9 | 2 bis 8 | Gew.-% | |
| Partikeldurchmesser $d_{50}$ | 2 bis 8 | 2,5 bis 7 | 3 bis 6 | $\mu$m | |
| Vicat-Erweichungstemperatur | ≤70 | ≤65 | ≤60 | °C | DIN EN ISO 306 |
| Partikeldurchmesser/ Schichtdicken-Verhältnis | 0,5 bis 4 | 1,0 bis 3,5 | 1,5 bis 3,0 | | |
| Dicke der Deckschicht (A) | 0,8 bis 5 | 0,9 bis 4,8 | 1,0 bis 4,6 | $\mu$m | |
| **Basisschicht (B)** | | | | | |

(fortgesetzt)

| Deckschicht (A) | bevorzugt | besonders bevorzugt | ganz besonders bevorzugt | Einheit | Messmethode |
|---|---|---|---|---|---|
| Anteil Ethylenterephthalat/ Copolyester | 85 bis 97 | 90 bis 97 | 92 bis 97 | Mol-% | |
| Anteil Ethylenisophthalat/ Copolyester | 3 bis 15 | 3 bis 10 | 3 bis 8 | Mol-% | |
| **Folieneigenschaften** | | | | | |
| Dicke der Folie | 5 bis 100 | 7 bis 80 | 10 bis 70 | $\mu$m | |
| Mindestsiegeltemperatur von Deckschicht (A) gegen polare Standardsubstrate | $\leq$140 | $\leq$130 | $\leq$120 | °C | |
| Peelkraft von Deckschicht (A) gegen polare Standardsubstrate | $\geq$1,5 | $\geq$2,0 | $\geq$2,5 | N/15 mm | |

Zur Charakterisierung der Rohstoffe und der Folien werden im Rahmen der vorliegenden Erfindung die folgenden Messmethoden benutzt:

Messung des mittleren Durchmessers $d_{50}$

Die Bestimmung des mittleren Durchmessers $d_{50}$ des Antiblockmittels wird mittels Laser auf einem Malvern Master Sizer (Malvern Instruments, Ltd., GB) mittels Laserscannung durchgeführt (andere Messgeräte sind z. B. Horiba LA 500 oder Sympathec Helos (Sympathec GmbH, DE), welche das gleiche Messprinzip verwenden). Die Proben werden dazu in eine Küvette mit Wasser gegeben und diese dann in das Messgerät gestellt. Mittels Laser wird die Dispersion abgerastert und aus dem Signal durch Vergleich mit einer Eichkurve die Partikelgrößenverteilung bestimmt. Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50%-Ordinatenwertes mit der Summenkurve liefert auf der Abszissenachse den gewünschten $d_{50}$-Wert (auch Median genannt).

SV-Wert

Der SV-Wert des Polymers wird durch die Messung der relativen Viskosität ($\eta_{rel}$) einer 1%-igen Lösung in Dichloressigsäure in einem Ubbelohde-Viskosimeter bei 25 °C bestimmt. Der SV-Wert ist wie folgt definiert:

$$SV = (\eta_{rel}-1) \bullet 1000.$$

Siegelnahtfestigkeit (Peelkraft)

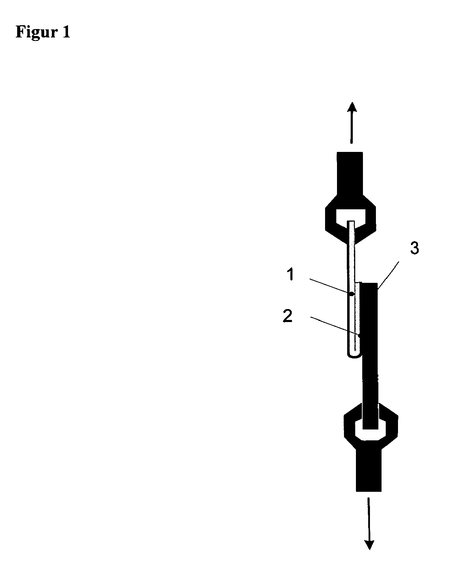

Zur Bestimmung der Siegelnahtfestigkeit wird ein Folienstreifen (100 mm lang · 15 mm breit) auf ein entsprechendes polares Substrat gelegt und bei der eingestellten Temperatur von $\geq$130 °C, einer Siegelzeit von 1,0 s und einem Siegeldruck von 4 bar (Siegelgerät HSG/ET der Firma Brugger (München, DE), einseitig beheizte Siegelbacke) gesiegelt. Die gesiegelten Streifen werden nach Abkühlung auf Raumtemperatur unter einem Winkel von 180° (vgl. Figur 1) auseinander gezogen und die benötigte Kraft mit einer Abzugsgeschwindigkeit von 200 mm/min bestimmt. Die Siegelnahtfestigkeit wird in N pro 15 mm Folienstreifen angegeben (z. B. 3 N/15 mm). Fig. 1 zeigt die Anordnung von peelfähiger Folie (1) mit Deckschicht (A) (2) und Streifen aus APET (3) im Zug-Dehnungs-Messgerät.

Bestimmung der Mindestsiegeltemperatur

Mit dem Siegelgerät HSG/ET der Firma Brugger werden, wie zuvor bei der Messung der Siegelnahtfestigkeit beschrieben, heißgesiegelte Proben (Siegelnaht 15 mm · 100 mm) hergestellt, wobei die Folie bei unterschiedlichen Temperaturen mit Hilfe einer einseitig beheizten Siegelbacke bei einem Siegeldruck von 4 bar und einer Siegeldauer von 1 s gesiegelt wird. Die 180°-Siegelnahtfestigkeit (vgl. Figur 1) wird wie bei der Bestimmung der Siegelnahtfestigkeit gemessen. Die Mindestsiegeltemperatur ist die Temperatur, bei der eine Siegelnahtfestigkeit von mindestens 0,5 N/15 mm erreicht wird.

Trübung

Die Trübung nach Hölz wird nach ASTM-D 1003-52 bestimmt.

Glanz

Der Glanz der Folie wird nach DIN 67530 bestimmt. Gemessen wird der Reflektorwert als optische Kenngröße für die Oberfläche einer Folie. Angelehnt an die Normen ASTM-D 523-78 und ISO 2813 wird der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Messwert ist dimensionslos und muss mit dem Einstrahlwinkel angegeben werden.

Weißgrad

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®ELREPHO der Firma Zeiss, Oberkochem, DE, Normlichtart C, 2°-Normalbeobachter. Der Weißgrad wird als WG = RY + 3RZ - 3RX 15 definiert. WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z. B. in Hansl Loos "Farbmessung", Verlag Beruf und Schule, Itzehoe (1989), beschrieben.

Schmelzindex

Der Schmelzindex wird nach DIN 537354 gemessen.

Vicat-Erweichungstemperatur

Die Vicat-Erweichungstemperatur wird nach DIN EN ISO 306 an einem Probekörper bestimmt, der die gleiche chemische Zusammensetzung aufweist wie diejenige der siegelfähigen Deckschicht (A). Zur Herstellung des Probekörpers wird dabei üblicherweise so vorgegangen, dass zunächst in einem Zweischneckenextruder (mit Entgasung) aus der Polymer- und Additivmischung ein Granulat hergestellt wird. Aus diesem wird dann in einem weiteren Schritt der Probekörper spritzgegossen.
Im Folgenden wird die Erfindung anhand von Beispielen näher erläutert, ohne darauf beschränkt zu sein.

**Beispiel**

Chips aus Ethylenterephthalat-Ethylenisophthalat-Copolyester mit 95 Mol-% Ethylenterephthalat und 5 Mol-% Ethylenisophthalat wurden dem Extruder für die Basisschicht (B) zugeführt. Daneben wurden Chips aus Polyethylenterephthalat und Partikel dem Extruder (Zweischneckenextruder) für die nicht siegelfähige Deckschicht (C) zugeführt. Entsprechend den in untenstehender Tabelle aufgeführten Verfahrensbedingungen wurden die Rohstoffe in den beiden jeweiligen Extrudern aufgeschmolzen und homogenisiert.
Daneben wurde einem Zweischneckenextruder mit Entgasungsvorrichtung(en) eine Mischung aus 70 Gew.-% Polyester (®Vitel1912, Bostik-Findley, USA, enthält 5 Gew.-% Sylysia 430, synthetisches $SiO_2$, Fa. Fuji, Japan, $d_{50}$ = 3,4 $\mu$m) und 30 Gew.-% anti-PET-Polymer (®Topas 8007, Advanced Polymers GmbH, Frankfurt, DE) für die siegelbare und peelfähige Deckschicht (A) zugeführt. Entsprechend den in untenstehender Tabelle aufgeführten Verfahrensbedingungen wurde der Rohstoff in dem Zweischneckenextruder aufgeschmolzen.
Dann wurden durch Coextrusion in einer Dreischichtdüse die drei Schmelzeströme übereinander geschichtet und über die Düsenlippe ausgestoßen. Der resultierende Schmelzefilm wurde abgekühlt und anschließend über eine stufenweise Orientierung in Längs- und Querrichtung und anschließende Fixierung eine transparente, dreischichtige Folie mit ABC-Aufbau in einer Gesamtdicke von 19 μm hergestellt. Die Dicke der Deckschicht (A) betrug 1,8 μm, die der Deckschicht (C) 1 μm.

| Deckschicht (A) | |
|---|---|
| 70 Gew.-% | Polyester, ®Vitel1912 mit 5 Gew.-% Sylysia 430 (Polyester, Bostik-Findley, USA; enthält die Dicarbonsäure-Bestandteile Azelainsäure, Sebazinsäure, Terephthalsäure, Isophthalsäure und weitere Dicarbonsäuren etwa im Molverhältnis 40/1/45/10/4 und als Diolkomponente mindestens 60 Mol-% Ethylenglykol). Die Glasübergangstemperatur beträgt ca. -1°C. |
| 30 Gew.-% | COC (®Topas 8007, Ticona, Frankfurt, DE; ein Ethylen/Norbornen-COC mit einer Tg von ca. 75 °C) |
| Basisschicht (B) | |
| 100 Gew.-% | Ethylenterephthalat-Ethylenisophthalat-Copolyester mit 95 Mol-% Ethylenterephthalat und 5 Mol-% Ethylenisophthalat mit einem SV-Wert von 800 |
| Deckschicht (C), | Mischung aus |
| 85 Gew.-% | Polyethylenterephthalat mit einem SV-Wert von 800 |
| 15 Gew.-% | Masterbatch aus 99 Gew.-% Polyethylenterephthalat (SV-Wert von 800) und 1,0 Gew.-% Sylobloc 44 H (synthetisches $SiO_2$ , Grace, Worms, DE), $d_{50}$ = 2,5 μm |

Die Herstellungsbedingungen in den einzelnen Verfahrensschritten waren:

| Extrusion | Temperaturen | A-Schicht: | 280 | °C |
|---|---|---|---|---|
| | | B-Schicht: | 280 | °C |
| | | C-Schicht: | 280 | °C |
| | Temperatur der Abzugswalze | | 25 | °C |
| Längsstreckung | Aufheiztemperatur | | 70-90 | °C |
| | Strecktemperatur | | 85 | °C |
| | Längsstreckverhältnis | | 2,9 | |
| Querstreckung | Aufheiztemperatur | | 105 | °C |
| | Strecktemperatur | | 135 | °C |
| | Querstreckverhältnis | | 4,0 | |
| Fixierung | Temperatur | | 230 | °C |
| | Dauer | | 3 | s |

Die Folie ließ sich einwandfrei produzieren, ohne dass ein Kleben der Folie auf den Walzen der Längsstreckung festgestellt wurde.

Die Mindestsiegeltemperaturen und die Siegelnahtfestigkeiten der Folie gegenüber APET und CPET sind in Tabelle 2 eingetragen. Für die Prüfung der Siegelnahtfestigkeit wurde die Folie bei 180 °C gegen APET und CPET gesiegelt (Siegeldruck 4 bar, Siegelzeit 1 s). Anschließend wurden Streifen des Verbundes aus erfindungsgemäßer Folie und Substrat entsprechend der vorgenannten Messvorschrift auseinander gezogen. Es zeigte sich jeweils das gewünschte Abschälen der Folien vom Substrat.
[APET = amorphes Polyethylenterephthalat (PET)
CPET = kristallines PET]

**Tabelle 2**

| | APET | CPET | Einheit |
|---|---|---|---|
| Mindestsiegeltemperaturen | 100 | 125 | °C |
| Siegelnahtfestigkeit | 5,6 | 2,9 | N/15 mm |

**Vergleichsbeispiel 1**

Es wurde das erfindungsgemäße Beispiel unter modifizierten Bedingungen wiederholt. In der Basisschicht (B) wurde anstelle des Ethylenterephthalat-Ethylenisophthalat-Copolyesters Polyethylenterephthalat verwendet. Die Längsstreckung wurde dabei mit folgendem Parametersatz durchgeführt:

| Extrusion | Temperaturen | A-Schicht: | 280 | °C |
|---|---|---|---|---|
| | | B-Schicht: | 280 | °C |
| | | C-Schicht: | 280 | °C |
| | Temperatur der Abzugswalze | | 25 | °C |
| Längs streckung | Aufheiztemperatur | | 70-115 | °C |
| | Strecktemperatur | | 110 | °C |
| | Längsstreckverhältnis | | 3,5 | |

Die Folie verklebte vergleichsweise oft in der Längsstreckung und wickelte sich dabei mehrmals um die Streckwalze, was zum Abbruch der Produktion führt. Die Walzen in der Längsstreckung mussten aufgrund von anhaftenden Polymerresten aus der Deckschicht (A) ausgetauscht und gereinigt werden. Damit ist ein hoher wirtschaftlicher Verlust verbunden.

**Patentansprüche**

1. Coextrudierte, biaxial orientierte Polyesterfolie, umfassend eine Basisschicht (B) und eine Deckschicht (A), wobei

   a) die Basisschicht (B) überwiegend aus einem Copolyester besteht, der Ethylenterephthalat- und Ethylenisophthalat-Einheiten enthält, wobei der Anteil an Ethylenisophthalat-Einheiten im Copolyester zwischen 3 und 15 Mol-% liegt, und
   b) die Deckschicht (A)

   58 bis 97 Gew.-% Polyester,
   2 bis 40 Gew.-% polyesterunverträgliches Polymer und
   1 bis 10 Gew.-% anorganische und/oder organische Partikel mit einem mittleren
   Durchmesser $d_{50}$ von 2 bis 8 $\mu$m enthält, wobei
   b1) der Polyester zu 20 bis 85 Mol-% aus Einheiten aufgebaut ist, die auf mindestens eine aromatische Dicarbonsäure zurückgehen, und zu 15 bis 80 Mol-% aus Einheiten aufgebaut ist, die auf mindestens eine aliphatische Dicarbonsäure zurückgehen, und wobei die Summe der dicarbonsäureabgeleiteten Molprozente 100 % ergibt.

2. Polyesterfolie nach Anspruch 1, **dadurch gekennzeichnet, dass** die Deckschicht (A) eine Dicke von 0,8 bis 5 $\mu$m aufweist.

3. Polyesterfolie nach Anspruch 1 oder 2, **dadurch gekennzeichnet, dass** die Basisschicht (B) den Copolyester zu mindestens 80 Gew.-% enthält.

4. Polyesterfolie nach einem oder mehreren der Ansprüche 1 bis 3, **dadurch gekennzeichnet, dass** die Basisschicht (B) zu 100 Gew.-% aus dem Copolyester besteht.

5. Polyesterfolie nach einem oder mehreren der Ansprüche 1 bis 4, **dadurch gekennzeichnet, dass** die Basisschicht (B) ein weißfärbendes Pigment in einer Konzentration von 3 bis 20 Gew.-% enthält.

6. Polyesterfolie nach einem oder mehreren der Ansprüche 1 bis 5, **dadurch gekennzeichnet, dass** die Folie als alleiniges weißfärbendes Pigment Titandioxid enthält.

7. Polyesterfolie nach einem oder mehreren der Ansprüche 1 bis 6, **dadurch gekennzeichnet, dass** die Deckschicht (A) zu mindestens 90 Gew.-% aus Polyester, polyesterunverträglichem Polymer und anorganischen und/oder organischen Partikeln besteht.

8. Polyesterfolie nach einem oder mehreren der Ansprüche 1 bis 7, **dadurch gekennzeichnet, dass** die Deckschicht (A) zu 100 Gew.-% aus Polyester, polyesterunverträglichem Polymer und anorganischen und/oder organischen Partikeln besteht.

9. Polyesterfolie nach einem oder mehreren der Ansprüche 1 bis 8, **dadurch gekennzeichnet, dass** der Polyester der Deckschicht (A) Azelainsäure-, Sebazinsäure-, Terephthalsäure- und/oder Isophthalsäure-Einheiten und Ethylenglykol-Einheiten enthält.

10. Polyesterfolie nach einem oder mehreren der Ansprüche 1 bis 9, **dadurch gekennzeichnet, dass** das polyesterunverträgliche Polymer der Deckschicht (A) ein Cycloolefincopolymer ist.

11. Polyesterfolie nach einem oder mehreren der Ansprüche 1 bis 10, **dadurch gekennzeichnet, dass** das polyesterunverträgliche Polymer der Deckschicht (A) ein Ethylen/- Norbornen-Cycloolefincopolymer ist.

12. Polyesterfolie nach einem oder mehreren der Ansprüche 1 bis 11, **dadurch gekennzeichnet, dass** die Deckschicht (A) 1 bis 10 Gew.-% $SiO_2$ enthält.

13. Polyesterfolie nach einem oder mehreren der Ansprüche 1 bis 12, **dadurch gekennzeichnet, dass** die Folie einen A-B-C-Schichtaufbau hat.

14. Polyesterfolie nach einem oder mehreren der Ansprüche 1 bis 13, **dadurch gekennzeichnet, dass** die Deckschicht (C) nicht siegelfähig ist.

15. Polyesterfolie nach einem oder mehreren der Ansprüche 1 bis 14, **dadurch gekennzeichnet, dass** die Deckschicht (C) Antiblockmittel, insbesondere $SiO_2$, enthält.

16. Polyesterfolie nach einem oder mehreren der Ansprüche 1 bis 15, **dadurch gekennzeichnet, dass** die Mindestsiegeltemperatur der Deckschicht (A) gegen polare Substrate gleich oder kleiner 140 °C ist.

17. Polyesterfolie nach einem oder mehreren der Ansprüche 1 bis 16, **dadurch gekennzeichnet, dass** die Siegelnahtfestigkeit der Deckschicht (A) zu polaren Substraten gleich oder größer 1,5 N/15 mm Folienbreite ist.

18. Verfahren zur Herstellung einer Polyesterfolie nach einem oder mehreren der Ansprüche 1 bis 17, umfassend die Schritte

    a) Herstellen einer mehrschichtigen Folie durch Coextrusion,
    b) biaxiales Strecken der Folie und
    c) Thermofixieren der gestreckten Folie.

19. Verfahren nach Anspruch 18, **dadurch gekennzeichnet, dass** die Längsstreckung bei Temperaturen von 60 bis 95 °C durchgeführt wird.

20. Verwendung einer Polyesterfolie nach einem oder mehreren der Ansprüche 1 bis 17 als Verpackungsmaterial für Nahrungs- und Genussmittel.

21. Verwendung nach Anspruch 20 als abziehbare Folie für Lebensmittelbehältnisse.

**Figur 1**

Europäisches
Patentamt

European
Patent Office

Office européen
des brevets

**EUROPÄISCHER RECHERCHENBERICHT**

Nummer der Anmeldung

EP 08 01 9928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| D,X | EP 1 471 096 A (MITSUBISHI POLYESTER FILM GMBH [DE]) 27. Oktober 2004 (2004-10-27) * Ansprüche 1-3,9,10,21 * * Absätze [0030], [0037], [0040], [0064], [0073] - [0076], [0081], [0084], [0091], [0099] * * Beispiele 1-3 * ----- | 1-21 | INV. B32B27/36 B32B27/20 B65D65/40 |
| D,X | EP 1 471 097 A (MITSUBISHI POLYESTER FILM GMBH [DE]) 27. Oktober 2004 (2004-10-27) * Ansprüche 1-3,9,10,21 * * Absätze [0029], [0039], [0073] - [0076], [0081], [0084] - [0086], [0091], [0092], [0100] * ----- | 1-21 | |
| D,X | EP 1 475 228 A (MITSUBISHI POLYESTER FILM GMBH [DE]) 10. November 2004 (2004-11-10) * Ansprüche 1-3,9,10,21 * * Absätze [0030], [0040], [0074] - [0077], [0082], [0091] - [0093], [0101] * ----- | 1-21 | |
| X | EP 1 529 635 A (MITSUBISHI POLYESTER FILM GMBH [DE]) 11. Mai 2005 (2005-05-11) * Ansprüche 1-4,18,21,23,24 * * Absätze [0034], [0044], [0063], [0064], [0072], [0081] - [0087], [0090], [0104] * ----- | 1-21 | RECHERCHIERTE SACHGEBIETE (IPC) B32B |
| X | EP 1 529 636 A (MITSUBISHI POLYESTER FILM GMBH [DE]) 11. Mai 2005 (2005-05-11) * Ansprüche 1-4,21,22,25,26 * * Absätze [0030], [0036], [0045] - [0048], [0054], [0090] - [0096], [0099], [0100], [0108], [0114] * ----- | 1-21 | |

-/--

Der vorliegende Recherchenbericht wurde für alle Patentansprüche erstellt

| Recherchenort | Abschlußdatum der Recherche | Prüfer |
|---|---|---|
| München | 20. Februar 2009 | Ansorge, Markus |

EPO FORM 1503 03.82 (P04C03)

Europäisches
Patentamt

European
Patent Office

Office européen
des brevets

**EUROPÄISCHER RECHERCHENBERICHT**

Nummer der Anmeldung

EP 08 01 9928

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 1 529 797 A (MITSUBISHI POLYESTER FILM GMBH [DE]) 11. Mai 2005 (2005-05-11) * Ansprüche 1-4,21-24 * * Absätze [0031], [0037], [0047], [0050] - [0052], [0056] - [0059], [0086], [0087], [0090], [0093] - [0095], [0116] * ----- | 1-21 | |
| X | EP 1 529 798 A (MITSUBISHI POLYESTER FILM GMBH [DE]) 11. Mai 2005 (2005-05-11) * Ansprüche 1-4,21,25,28 * * Absätze [0026], [0032], [0041], [0064] - [0066], [0075] - [0077], [0098] - [0101], [0115] * ----- | 1-21 | |
| X | EP 1 529 799 A (MITSUBISHI POLYESTER FILM GMBH [DE]) 11. Mai 2005 (2005-05-11) * Ansprüche 1-3,7,20,21,24 * * Absätze [0031], [0037], [0046], [0069], [0070], [0078] - [0083], [0103] - [0106], [0117] * ----- | 1-21 | |
| X | EP 1 529 800 A (MITSUBISHI POLYESTER FILM GMBH [DE]) 11. Mai 2005 (2005-05-11) * Ansprüche 1,2,7,12,29 * * Absätze [0030], [0036], [0046], [0069] - [0072], [0077] - [0083], [0102] - [0105], [0121] * ----- | 1-21 | |

RECHERCHIERTE SACHGEBIETE (IPC)

Der vorliegende Recherchenbericht wurde für alle Patentansprüche erstellt

| Recherchenort | Abschlußdatum der Recherche | Prüfer |
|---|---|---|
| München | 20. Februar 2009 | Ansorge, Markus |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...................................................................

& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 08 01 9928

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

20-02-2009

| Im Recherchenbericht angeführtes Patentdokument | | Datum der Veröffentlichung | Mitglied(er) der Patentfamilie | | Datum der Veröffentlichung |
|---|---|---|---|---|---|
| EP 1471096 | A | 27-10-2004 | DE | 10318102 A1 | 11-11-2004 |
| | | | JP | 2004322644 A | 18-11-2004 |
| | | | KR | 20040091574 A | 28-10-2004 |
| | | | US | 2004213966 A1 | 28-10-2004 |
| EP 1471097 | A | 27-10-2004 | DE | 10318101 A1 | 11-11-2004 |
| | | | JP | 2004322645 A | 18-11-2004 |
| | | | KR | 20040091575 A | 28-10-2004 |
| | | | US | 2005042441 A1 | 24-02-2005 |
| EP 1475228 | A | 10-11-2004 | DE | 10318097 A1 | 11-11-2004 |
| | | | JP | 2004322642 A | 18-11-2004 |
| | | | KR | 20040091572 A | 28-10-2004 |
| | | | US | 2004213967 A1 | 28-10-2004 |
| EP 1529635 | A | 11-05-2005 | DE | 10352430 A1 | 09-06-2005 |
| | | | JP | 2005145070 A | 09-06-2005 |
| | | | KR | 20050045865 A | 17-05-2005 |
| | | | US | 2005100729 A1 | 12-05-2005 |
| EP 1529636 | A | 11-05-2005 | DE | 10352432 A1 | 09-06-2005 |
| | | | JP | 2005186611 A | 14-07-2005 |
| | | | KR | 20050045868 A | 17-05-2005 |
| | | | US | 2005100718 A1 | 12-05-2005 |
| EP 1529797 | A | 11-05-2005 | DE | 10352431 A1 | 09-06-2005 |
| | | | JP | 2005145069 A | 09-06-2005 |
| | | | KR | 20050045869 A | 17-05-2005 |
| | | | US | 2005100750 A1 | 12-05-2005 |
| EP 1529798 | A | 11-05-2005 | DE | 10352444 A1 | 09-06-2005 |
| | | | JP | 2005145068 A | 09-06-2005 |
| | | | KR | 20050045867 A | 17-05-2005 |
| | | | US | 2005118412 A1 | 02-06-2005 |
| EP 1529799 | A | 11-05-2005 | DE | 10352440 A1 | 09-06-2005 |
| | | | JP | 2005145067 A | 09-06-2005 |
| | | | KR | 20050045866 A | 17-05-2005 |
| | | | US | 2005121822 A1 | 09-06-2005 |
| EP 1529800 | A | 11-05-2005 | DE | 10352439 A1 | 09-06-2005 |
| | | | JP | 2005145066 A | 09-06-2005 |
| | | | KR | 20050045864 A | 17-05-2005 |
| | | | US | 2005173050 A1 | 11-08-2005 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

### In der Beschreibung aufgeführte Patentdokumente

- DE 10128711 A
- EP 1471096 A
- EP 1471097 A
- EP 1475228 A
- EP 1475229 A
- EP 1471094 A
- EP 1471098 A
- EP 1165317 B
- EP 1068949 A
- JP 5009319 A
- DD 109224
- DD 237070
- EP 0156464 A
- EP 0283164 A
- EP 0407870 A
- EP 0485893 A
- EP 0503422 A

### In der Beschreibung aufgeführte Nicht-Patentliteratur

- Handbook of Thermoplastic Polyesters. Wiley-VCH, 2002
- Polyesters, Films. Encyclopedia of Polymer Science and Engeneering. John Wiley & Sons, 1988, vol. 12
- **HANSL LOOS.** Farbmessung. Verlag Beruf und Schule, 1989